# EUROPÄISCHE PATENTSCHRIFT

(11) **EP 3 196 600 B1**
(45) Veröffentlichungstag und Bekanntmachung des Hinweises auf die Patenterteilung: **19.08.2020**
(21) Anmeldenummer: 17152202.2
(22) Anmeldetag: 19.01.2017
(51) Int. Cl.: G01F 1/115, G01F 15/14

(54) **DURCHFLUSSMESSER**
FLOW METER
DÉBITMÈTRE

(30) Priorität: 22.01.2016 DE 102016101162
(43) Veröffentlichungstag der Anmeldung: 26.07.2017
(73) Patentinhaber: Horn GmbH & Co. KG, 24937 Flensburg (DE)
(72) Erfinder: MOHR, Jörg, 24392 Süderbrarup (DE); HOLSTE, Oliver, 24983 Handewitt (DE)
(74) Vertreter: Stoffregen, Hans-Herbert

(56) Entgegenhaltungen:
- WO-A1-2008/105330
- WO-A1-2011/055362
- WO-A1-2014/006001
- DE-A1- 3 703 117
- DE-A1- 10 111 993
- JP-A- 2009 063 467
- US-A1- 2012 325 016

## Beschreibung

Die Erfindung bezieht sich auf einen Durchflussmesser für Flüssigkeiten nach dem Oberbegriff des Anspruchs 1.

Ein Durchflussmesser der eingangs genannten Art ist in der WO 2014/006001A1 beschrieben. Bei der bekannten Ausführungsform ist das Messgehäuse in eine Ausnehmung des Sensorgehäuses eingeschoben, wobei die Außenkontur des Messgehäuses und die Ausnehmung im Wesentlichen quaderförmig ausgebildet sind. Folglich ist eine Drehung des Sensorgehäuses in Umfangsrichtung bezogen auf das Messgehäuse verhindert. Eine Nachjustierung des Sensorgehäuses in Umfangsrichtung bei fest installiertem Messgehäuse ist somit nicht möglich.

Die DE 37 03 117 A1 betrifft einen magnetischen Durchflussmesser für fluide Medien, mit einem Flügelrad mit axialer Beaufschlagung. Dabei ist vorgesehen, dass ein Flügelrad in einem aus unmagnetischem Material bestehenden Rohrstück ohne Achsdurchführungen axialsymmetrisch gelagert ist und bei Rotation eine periodische Änderung eines Magnetfeldes hervorruft, das von einem außerhalb des Rohrstücks angebrachten magnetischen Sensor detektiert und ein mit Rotationsfrequenz korreliertes Messsignal erzeugt wird, welches über einen Zählerbaustein elektronisch gezählt, gespeichert und angezeigt wird.

Der magnetische Sensor, die elektronischen Zählerbausteine und eine Pufferbatterie sind in einem das Rohrstück umschließenden und damit äußere magnetische Störfelder abschirmenden Gehäuse angebracht.

Die DE 102 449 566 A1 bezieht sich auf einen Durchflussmesser, der unterschiedlich auf Vorwärts- und Rückwärtsdurchströmung anspricht. Der Durchflussmesser weist ein zweiteiliges Gehäuse auf. Sein eingangsseitiges Gehäuseteil ist rohrartig ausgebildet und steckt mit einem Rohrfortsatz in einem entsprechenden Aufnahmebereich eines zweiten, ausgangsseitigen Gehäuseteils. Zur Abdichtung zwischen den Gehäuseteilen ist der erste Gehäuseteil mit radial nach außen offenen Ringnuten versehen, in den O-Ringe sitzen.

Die DE 101 11 993 A1 bezieht sich auf einen Durchflussmengen-Sensor mit einem Gehäuse, mit einem Sensorteil und einem in dem Gehäuse angeordneten Messrohr mit einem Wasserdurchflussmengen-Messteil. Das Gehäuse mit Sensorteil weist Anschlüsse auf und ist mit diesen fest in einer Messstrecke eingebaut. Das Messrohr ist nicht fest mit der Messstrecke verbunden. Eine Drehung des Sensorgehäuses in Umfangsrichtung des Messrohrs ist ohne Lösen der Anschlüsse nicht möglich.

Die WO 2008/105330 A1 bezieht sich auf einen Durchflussmesser mit zwei röhrenförmigen Gehäuseteilen, wobei in einem ersten Gehäuseteil ein Flügelrad angeordnet ist. Jedes der Gehäuseteile weist endseitig einen Anschluss für eine Rohrleitung auf. Die Gehäuseteile sind miteinander verbindbar, wobei zwischen den Gehäuseteilen eine Dichtung angeordnet ist.

Die EP 2 154 490 A1 bezieht sich auf einen Durchflussmesser für Flüssigkeiten mit einem Messgehäuse mit einem ersten Anschluss und einem zweiten Anschluss, wobei ein Sensorgehäuse fest mit dem Messgehäuse gekoppelt ist.

Davon ausgehend liegt der vorliegenden Erfindung die Aufgabe zugrunde, einen Durchflussmesser der eingangs genannten Art derart weiterzubilden, dass die Montage des Messgehäuses und des Sensorgehäuses vereinfacht wird.

Die Aufgabe wird erfindungsgemäß unter anderem durch die Merkmale des Anspruchs 1 gelöst.

Das Messgehäuse ist als Messrohr ausgebildet und weist einen geschlossenen zylinderförmigen Oberflächenabschnitt auf, wobei das Sensorgehäuse mit einer an den zylinderförmigen Oberflächenabschnitt angepassten Ausnehmung koaxial zu dem Messrohr und in Umfangsrichtungen drehbar auf dem Oberflächenabschnitt angeordnet und in beliebiger Drehlage bezogen auf die Umfangsrichtung des Messrohres fixierbar ist.

Die erfindungsgemäße Ausführungsform zeichnet sich gegenüber dem Stand der Technik dadurch aus, dass das Messrohr in beliebiger Drehlage in eine Messstrecke eingebaut werden kann, da das Sensorgehäuse auf dem geschlossenen zylinderförmigen Oberflächenabschnitt des fest montierten Messrohrs auch nachträglich noch in eine z. B. für das Ablesen einer Anzeigeeinheit dienliche Position gedreht werden kann. Das Sensorgehäuse kann unabhängig von der Drehlage des Messrohrs auf dieses aufgesteckt und in beliebiger Drehlage fixiert werden.

Die Fixierung des Sensorgehäuses erfolgt vorzugsweise mittels eines Klemmelementes in beliebiger Drehlage bezogen auf die Umfangsrichtung des Messrohrs.

Um eine Bewegung des Sensorgehäuses in axialer Richtung des Messrohrs zu vermeiden, ist vorgesehen, dass der zylinderförmige Oberflächenbereich des Messrohrs in axialer Richtung durch Begrenzungsmittel wie umlaufende Flansche begrenzt ist. Die Flansche können an Seitenwandungen des Sensorgehäuses anliegen bzw. die Seitenwandungen können Aufnahmen aufweisen, welche die umlaufenden Flansche aufnehmen.

Um einerseits eine optimale Signalübertragung und andererseits eine hohe Stabilität zu erreichen, ist vorgesehen, dass eine Wandstärke des zylinderförmigen Oberflächenbereichs des Messrohrs konisch ausgebildet ist, wobei eine Wandung des Messrohrs im Bereich des Messgliedes eine geringere Wandstärke aufweist als im Bereich der umlaufenden Flansche.

Gemäß einer weiteren bevorzugten Ausführungsform ist vorgesehen, dass das Sensorgehäuse im Bereich des Sensors ein Messfenster aufweist, welches als eine Aussparung oder als ein Abschnitt mit geringer Wandstärke ausgebildet ist.

Die Wandung des Messrohrs sowie das Messfenster des Sensorgehäuses sind aus einem für elektromagnetische Strahlung durchlässigen Material ausgebildet.

Um eine enge Kopplung zwischen dem zylinderförmigen Oberflächenbereich des Messrohrs und der Innenwandung des Sensorgehäuses zu erreichen, ist vorgesehen, dass eine dem zylinderförmigen Oberflächenbereich zugewandte Oberfläche der Ausnehmung des Sensorgehäuses an eine Kontur des Oberflächenbereichs des Messrohrs angepasst ist.

Gemäß einer weiteren bevorzugten Ausführungsform ist vorgesehen, dass der Durchflussmesser als Kompakt-Durchflussmesser ausgebildet ist, das heißt, dass in dem Sensorgehäuse zusätzlich zu dem Sensor eine Auswerteelektronik, eine Anzeigeeinheit mit Bedienelementen und/oder eine Energieversorgung angeordnet ist. Das erfindungsgemäße Sensorgehäuse übernimmt somit die Funktion eines Transmitters zur berührungslosen und kabellosen Erfassung eines Durchflusses von Flüssigkeiten durch das Messrohr.

Um eine kompakte Bauweise zu erreichen, ist der Sensor auf einem Träger wie Platine angeordnet, die lösbar in dem Sensorgehäuse angeordnet ist.

Vorzugsweise ist der Sensor auf einer dem Messglied zugewandten Unterseite des Trägers im Bereich des Messfensters angeordnet.

Der Sensor ist vorzugsweise als Reed-Kontakt ausgebildet, der die Drehung des vorzugsweise als Magnet ausgebildeten Geberelementes erfasst.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung eines den Zeichnungen zu entnehmenden bevorzugten Ausführungsbeispiels.

Es zeigen:
- Fig. 1: eine Explosionsdarstellung des Durchflussmessers,
- Fig. 2: eine Vorderansicht des Durchflussmessers,
- Fig. 3: eine Draufsicht des Durchflussmessers und
- Fig. 4: eine Schnittdarstellung des Durchflussmessers entlang der Schnittlinie A-A gemäß Figur 1

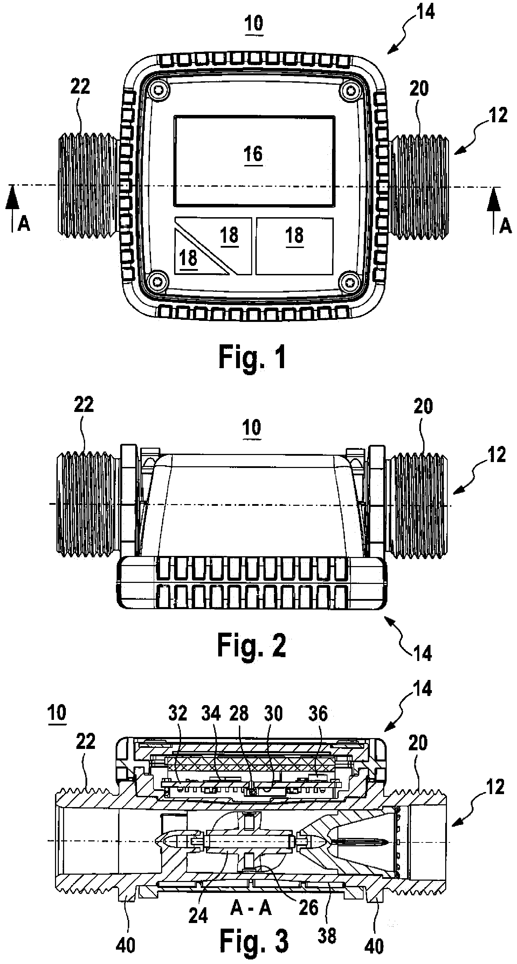

Fig. 1 und Fig. 2 zeigen in Vorder- und Draufsicht einen Durchflussmesser 10 für Flüssigkeiten, umfassend ein als Messrohr ausgebildetes Messgehäuse 12 sowie ein lösbar mit dem Messgehäuse 12 verbundenes Sensorgehäuse 14 zur berührungs- und kabellosen Erfassung des Durchflusses mit Anzeigeeinheit 16 und Bedienelementen 18. Das Sensorgehäuse 14 ist in Umfangsrichtung drehbar auf dem Messgehäuse 12 angeordnet.

Fig. 3 zeigt eine Schnittdarstellung des Durchflussmessers 10 entlang der Schnittlinie A-A gemäß Fig. 1. Das Messgehäuse 12 ist als Messrohr ausgebildet, in dem ein Messglied 24 in Form eines Turbinenrades oder Flügelrades drehbar angeordnet ist. Dem Turbinenrad ist zumindest ein Geberelement 26 in Form eines Magneten zugeordnet, so dass die Drehung des Turbinenrads 24 mittels eines in dem Sensorgehäuse 14 angeordneten Sensors 28 wie Reed-Kontakt berührungslos in beliebiger Umfangsposition des Sensorgehäuses 14 relativ zu dem Messrohr erfasst und als Durchfluss angezeigt werden kann.

Der Sensor 28 ist auf einer dem Messglied 24 zugewandten Unterseite 30 eines Trägerelementes 32 wie Platine angeordnet. Auf einer Oberseite 34 des Trägerelements 32 sind eine Auswerteelektronik 36 sowie die Anzeigeeinheit 16 und die Bedienelemente 18 vorgesehen.

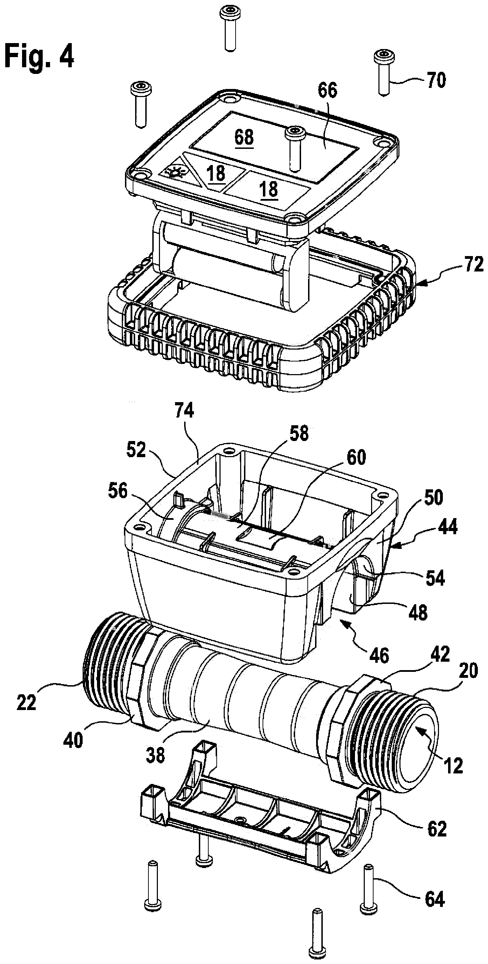

Fig. 4 zeigt eine Explosionsdarstellung des Durchflussmessers 10. Das als Messrohr ausgebildete Messgehäuse 12 weist eine im Wesentlichen zylinderförmige Oberfläche 38 auf, die randseitig von umlaufenden Flanschen 40, 42 begrenzt wird. An die Flansche 40, 42 schließen sich jeweils der Anschluss 20 als Zulaufrohr bzw. der Anschluss 22 als Ablaufrohr in Form von Gewindestutzen an.

Das Gehäuse 14 ist mehrteilig ausgebildet und umfasst einen Grundkörper 44 zur Aufnahme des Sensors 28 sowie der Auswerteelektronik 34 mit Anzeigeeinheit 16 und Bedienelementen 18. Der Grundkörper 44 weist eine zylinderförmige Ausnehmung 46 auf, mit einer Oberfläche 48, die im Wesentlichen an eine Kontur der Oberfläche 38 des Messrohrs angepasst ist, wie dies in der Schnittdarstellung gemäß Fig. 3 dargestellt ist. In Seitenwandungen 50, 52 des Grundkörpers 44 sind des Weiteren Aufnahmen 54, 56 vorgesehen, in denen die Flansche 40, 42 aufgenommen sind, wenn der Grundkörper 44 auf das Messgehäuse 12 aufgesetzt ist. Dadurch wird eine Verschiebung des Sensorgehäuses 14 in axialer Richtung des Messrohrs verhindert.

In einer Wandung 58 der Ausnehmung 46 ist ein Messfenster 60 ausgebildet. Das Messfenster kann als Aussparung oder als Wandung mit geringer Wandstärke ausgebildet sein. Das Messfenster 60 ist einerseits zu der Position des Sensors 28 und andererseits zu der Position des Messgliedes 24 ausgerichtet.

Der Grundkörper 44 wird auf das Messrohr 12 aufgesteckt, und kann in Umfangsrichtung auf dem Messrohr 12 gedreht werden. Die Fixierung des Grundkörpers 44 erfolgt über ein Fixierelement 62 in Form eines Klemmdeckels, der mittels Befestigungsmitteln 64 wie Schrauben mit dem Grundkörper 44 verbindbar ist. Folglich kann das Sensorgehäuse 14 in einer beliebigen Drehposition fixiert werden.

Der Grundkörper 44 ist mittels eines Deckels 66 verschließbar, in dem ein transparenter Bereich 68 zur Ansicht der Anzeigeeinheit 16 sowie die Bedienelemente 18 angeordnet sind. Der Deckel 66 ist über Befestigungselemente 70 wie Schrauben mit dem Grundkörper 44 verbindbar. Eine Verbindungsstelle zwischen Deckel 66 und Grundkörper 44 ist vorzugsweise mit einem umlaufenden Stoßschutzelement 72 umrandet, welches zwischen dem Deckel 66 und einer oberen Berandung 74 des Grundkörpers 44 einklemmbar ist.

## Patentansprüche

1. Durchflussmesser (10) für Flüssigkeiten, umfassend ein Messgehäuse (12) in Form eines Messrohrs mit einem ersten Anschluss (20) wie Zulauf und einem zweiten Anschluss (22) wie Ablauf zur Verbindung mit einer Messstrecke, wobei das Messrohr (12) in beliebiger Drehlage fest in die Messstrecke einbaubar ist, ein Messglied (24) in Form eines Flügelrads mit zumindest einem Geberelement (26) wie Magnet, wobei das Flügelrad (24) drehbar in dem Messrohr (12) gelagert und von einem Oberflächenbereich (38) des Messrohrs (12) umschlossen ist, ein Sensorgehäuse (14) mit einer an den Oberflächenbereich (38) angepassten Ausnehmung (46), welches durch Aufstecken an das in der Messstrecke montierte Messrohr (12) koppelbar ist und dieses zumindest teilweise umschließt, wobei in dem Sensorgehäuse (14) zumindest ein auf das Geberelement (26) ansprechender Sensor (28) zur Ermittlung einer das Messrohr (12) durchströmenden Flüssigkeitsmenge aufgrund der Umdrehungen des Flügelrades (24) angeordnet ist und wobei das Sensorgehäuse (14) mittels eines Fixierelementes an dem Messrohr (12) fixierbar ist,
wobei, der Oberflächenbereich (38) geschlossenen zylinderförmig ausgebildet ist und dass das Sensorgehäuse (14) mit der an den zylinderförmigen Oberflächenbereich (38) angepassten Ausnehmung (46) koaxial zu dem Messrohr und in Umfangsrichtung drehbar auf dem Oberflächenbereich (38) angeordnet und in beliebiger Drehlage bezogen auf die Umfangsrichtung des Messrohrs (12) fixierbar ist.

2. Durchflussmesser nach Anspruch 1,
**dadurch gekennzeichnet,**
**dass** das Fixierelement (62) ein Klemmdeckel ist.

3. Durchflussmesser nach Anspruch 1,
**dadurch gekennzeichnet,**
**dass** der zylinderförmige Oberflächenbereich (38) des Messrohrs (12) in axialer Richtung durch Begrenzungsmittel (40, 42) wie umlaufende Flansche begrenzt ist.

4. Durchflussmesser nach Anspruch 3,
**dadurch gekennzeichnet,**
**dass** der zylinderförmige Oberflächenbereich (38) des Messrohrs konisch ausgebildet ist, wobei eine Wandung des Messrohrs im Bereich des Messgliedes (24) eine geringere Wandstärke aufweist als im Bereich der umlaufenden Flansche (40, 42).

5. Durchflussmesser nach zumindest einem der vorhergehenden Ansprüche,
**dadurch gekennzeichnet,**
**dass** das Sensorgehäuse (14) im Bereich des Sensors (28) ein Messfenster (60) aufweist, welches als eine Aussparung oder ein Wandabschnitt mit geringer Wandstärke ausgebildet ist.

6. Durchflussmesser nach Anspruch 5,
**dadurch gekennzeichnet,**
**dass** die Wandung des Messrohrs (12) sowie das Messfenster (60) des Sensorgehäuses (14) aus einem für elektromagnetische Strahlung durchlässigen Material ausgebildet sind.

7. Durchflussmesser nach zumindest einem der Ansprüche 2 bis 6,
**dadurch gekennzeichnet,**
**dass** eine dem zylinderförmigen Oberflächenbereich (38) zugewandte Oberfläche (48) der Ausnehmung (46) des Sensorgehäuses (14) an eine Kontur des Oberflächenbereichs (38) des Messrohrs (12) angepasst ist.

8. Durchflussmesser nach zumindest einem der vorhergehenden Ansprüche,
**dadurch gekennzeichnet,**
**dass** in dem Sensorgehäuse (14) zusätzlich zu dem Sensor (28) eine Auswerteelektronik (34), eine Anzeigeeinheit (16) mit Bedienelementen (18) und/oder eine Energieversorgung angeordnet ist.

9. Durchflussmesser nach zumindest einem der vorhergehenden Ansprüche,
**dadurch gekennzeichnet,**
**dass** der Sensor (28) auf einem Träger (32) wie Platine angeordnet ist, die lösbar in dem Sensorgehäuse (14) angeordnet ist.

10. Durchflussmesser nach Anspruch 9,
**dadurch gekennzeichnet,**
**dass** der Sensor (28) auf eine Unterseite (30) des Trägers (32) im Bereich des Messfensters (60) angeordnet ist.

11. Durchflussmesser nach zumindest einem der vorhergehenden Ansprüche,
**dadurch gekennzeichnet,**
**dass** der Sensor (28) als Reed-Kontakt ausgebildet ist.

12. Durchflussmesser nach zumindest einem der Ansprüche 4 bis 11,
**dadurch gekennzeichnet,**
**dass** in Seitenwandungen (50, 52) des Sensorgehäuses (14) Aufnahmen (54, 56) für die umlaufenden Flansche (40, 42) ausgebildet sind.

## Claims

1. Flow meter (10) for liquids, comprising a measuring housing (12) in the form of a measuring pipe with a first connection (20) such as an inlet and with a second connection (22) such as an outlet for connection to a measuring section, said measuring pipe (12) being permanently installable into the measuring section in any rotational position; a measuring member (24) in the form of an impeller with at least one encoder element (26) such as a magnet, said impeller (24) being rotatably mounted in the measuring pipe (12) and enclosed by a surface region (38) of the measuring pipe (12); a sensor housing (14) with a recess (46) adapted to the surface region (38) which is connectable by fitting it onto the measuring pipe (12) mounted in the measuring section and which encloses said measuring pipe at least partially, at least one sensor (28) responding to the encoder element (26) being arranged in the sensor housing (14) to determine an amount of liquid flowing through the measuring pipe (12) on the basis of the revolutions of the impeller (24) and said sensor housing (14) being fixable on the measuring pipe (12) by means of a fixing element, the surface region (38) being designed as a closed cylinder and said sensor housing (14) with the recess (46) adapted to the cylindrical surface region (38) being arranged on the surface region (38) coaxially to the measuring pipe and rotatably in the circumferential direction and being fixable in any rotational position relative to the circumferential direction of the measuring pipe (12).

2. Flow meter according to claim 1,
wherein
the fixing element (62) is a clamp cover.

3. Flow meter according to claim 1,
wherein
the cylindrical surface region (38) of the measuring pipe (12) is limited in the axial direction by limiting means (40, 42) such as all-round flanges.

4. Flow meter according to claim 3,
wherein
the cylindrical surface region (38) of the measuring pipe is designed conical, one wall of the measuring pipe having a lower wall thickness in the area of the measuring member (24) than in the area of the all-round flanges (40,42).

5. Flow meter according to at least one of the preceding claims,
wherein
the sensor housing (14) has in the area of the sensor (28) a measuring window (60) which is designed as a cutout or as a wall section with low wall thickness.

6. Flow meter according to claim 5,
wherein
the wall of the measuring pipe (12) and the measuring window (60) of the sensor housing (14) are designed using a material permeable to electromagnetic radiation.

7. Flow meter according to at least one of claims 2 to 6,
wherein
a surface (48), facing the cylindrical surface region (38), of the recess (46) of the sensor housing (14) is adapted to a contour of the surface region (38) of the measuring pipe (12).

8. Flow meter according to at least one of the preceding claims,
wherein
an electronic evaluation unit (34), a display unit (16) with operating elements (18) and/or an energy supply unit is arranged in the sensor housing (14) additionally to the sensor (28).

9. Flow meter according to at least one of the preceding claims,
wherein
the sensor (28) is arranged on a carrier (32) such as a printed circuit board, arranged detachably in the sensor housing (14).

10. Flow meter according to claim 9,
wherein
the sensor (215) is arranged on an underside (30) of the carrier (32) in the area of the measuring window (60).

11. Flow meter according to at least one of the preceding claims,
wherein
the sensor (28) is designed as a reed contact.

12. Flow meter according to at least one of claims 4 to 11,
wherein
receptacles (54, 56) for the all-round flanges (40, 42) are provided in side walls (50, 52) of the sensor housing (14).

## Revendications

1. Débitmètre (10) pour les liquides, comprenant un boîtier de mesure (12) en forme de tube de mesure avec un premier raccord (20) telle une arrivée et un second raccord (22) tel un écoulement pour le relier à une veine d'essai, sachant que le tube de mesure (12) est montable de manière fixe dans la veine d'essai dans n'importe quelle position angulaire, un organe de mesure (24) sous forme de roue à palettes avec au moins un élément émetteur (26) tel un aimant, sachant que la roue à palettes (24) est montée de manière à être rotative dans le tube de mesure (12) et est entourée par une zone superficielle (38) du tube de mesure (12), un boîtier de capteur (14) avec un évidement (46) adapté à la zone superficielle (38), lequel boîtier de capteur peut être accouplé en l'emboîtant dans le tube de mesure (12) monté dans la veine d'essai et entoure ledit tube de mesure au moins partiellement, sachant que le boîtier de capteur (14) est fixable au tube de mesure (12) par le biais d'un élément de fixation, sachant qu'au moins un capteur (28) réagissant à l'élément émetteur (26) et destiné à déterminer une quantité de liquide traversant le tube de mesure (12) en raison des rotations de la roue à palettes (24) est disposé dans le boîtier de capteur (14) et sachant que le boîtier de capteur (14) est fixable au tube de mesure (12) au moyen d'un élément de fixation, sachant que la zone superficielle (38) présente une forme cylindrique et fermée, et que le boîtier de capteur (14) avec l'évidement (46) adapté à la zone superficielle (38) cylindrique est disposé coaxialement au tube de mesure et de manière rotative dans le sens circonférentiel, sur la zone superficielle (38) et est fixable dans n'importe quelle position angulaire par rapport au sens circonférentiel du tube de mesure (12).

2. Débitmètre selon la revendication 1,
**caractérisé en ce**
**que** l'élément de fixation (62) est un couvercle de serrage.

3. Débitmètre selon la revendication 1,
**caractérisé en ce**
**que** la zone superficielle (38) cylindrique du tube de mesure (12) est limitée dans le sens axial par des moyens de délimitation (40, 42) tels que des brides périphériques.

4. Débitmètre selon la revendication 3,
**caractérisé en ce**
**que** la zone superficielle (38) cylindrique du tube de mesure est conçue sous forme conique, sachant qu'une paroi du tube de mesure présente une épaisseur de paroi plus faible dans la zone de l'organe de mesure (24) que dans la zone des brides périphériques (40, 42).

5. Débitmètre selon au moins une des revendications précédentes,
**caractérisé en ce**
**que** le boîtier de capteur (14) présente une lucarne de mesure (60) dans la zone du capteur (28), qui est conçue sous forme d'évidement ou sous forme de section de paroi de faible épaisseur.

6. Débitmètre selon la revendication 5
**caractérisé en ce**
**que** la paroi du tube de mesure (12) ainsi que la lucarne de mesure (60) du boîtier de capteur (14) sont conçues dans un matériau perméable au rayonnement électromagnétique.

7. Débitmètre selon au moins une des revendications 2 à 6,
**caractérisé en ce**
**qu'**une surface (48) de l'évidement (46) du boîtier de capteur (14), tournée vers la zone superficielle (38) cylindrique est adaptée à un contour de la zone superficielle (38) du tube de mesure (12).

8. Débitmètre selon au moins une des revendications précédentes,
**caractérisé en ce**
**qu'**une unité électronique d'exploitation (34), une unité d'affichage (16) avec éléments de commande (18) et/ou une alimentation électrique sont disposées dans le boîtier de capteur (14) en plus du capteur (28).

9. Débitmètre selon au moins une des revendications précédentes,
**caractérisé en ce**
**que** le capteur (28) est disposé sur un support (32) tel qu'un circuit imprimé qui est disposé de manière détachable dans le boîtier de capteur (14).

10. Débitmètre selon la revendication 9
**caractérisé en ce**
**que** le capteur (28) est disposé sur une face inférieure (30) du support (32) dans la zone de la lucarne de mesure (60).

11. Débitmètre selon au moins une des revendications précédentes,
**caractérisé en ce**
**que** le capteur (28) est conçu sous forme de contact reed.

12. Débitmètre selon au moins une des revendications 4 à 11,
**caractérisé en ce**
**que** des logements (54, 56) pour les brides périphériques (40,42) sont conçus dans les parois latérales (50, 52) du boîtier de capteur (14).
